# EUROPEAN PATENT SPECIFICATION

(11) **EP 0 422 925 B1**
(45) Date of publication and mention of the grant of the patent: **11.09.1996**
(21) Application number: 90311119.3
(22) Date of filing: 10.10.1990
(51) Int. Cl.: G06K 15/00, G06K 15/10, B41J 2/21

(54) **Method and apparatus for interlaced printing**
Verfahren und Gerät zum verschachtelten Druck
Méthode et appareil pour impression entrelacée

(30) Priority: 10.10.1989 US 419367; 10.10.1989 US 419302; 06.11.1989 US 419420
(43) Date of publication of application: 17.04.1991
(73) Proprietor: TEKTRONIX INC., Beaverton Oregon 97077-0001 (US)
(72) Inventor: MacLane, Donald B., Portland, Oregon 97223 (US); DeSpain, Mark J., Albuquerque, New Mexico 87111 (US); Goetz, Howard V., Tigard, Oregon 97223 (US); Springer, Richard A., Tualatin, Oregon 97062 (US)
(74) Representative: Lawrence, Malcolm Graham

(56) References cited:
- US-A- 4 069 486
- US-A- 4 232 324
- US-A- 4 401 991
- US-A- 4 743 127

## Description

This invention relates to printing, and in particular, to printing wherein an image is formed by printing a plurality of sets of lines by a print head scanning a print medium.

The preferred apparatus for and method of practicing the present invention is associated with an ink jet printer wherein a print head scans a print medium, most typically a sheet of paper, by shuttling back and forth across the sheet of paper or by moving continuously along the sheet of paper which is held against a rotating drum. Images are formed by selectively depositing ink deposits or pixels which are located on lines and in columns. The present invention however is equally applicable to any printing process wherein a print head travels along parallel lines relative to a print medium to form a desired final image, whether that image be graphic or textual.

Early scanning print heads contain a single nozzle per color of printing. This nozzle is positioned adjacent a sheet of paper. A print head carriage then moves relative to the paper one line at a time depositing ink pixels at selected pixel locations until the entire image area has been scanned.

The length of time that it takes to make the image on the page depends on the rate of travel of the head relative to the paper and the density of pixels, and therefore lines, desired in the final image. In many commercial applications it is desirable to make the pixels small and dense enough so that the human eye during normal unaided viewing is unable to distinguish between the pixels, thereby making the image appear to be formed of continuous lines. A pixel density of 11.81 dots per mm (300 dots per inch DPI) is common. This means that in order to print one inch of image across a page, 300 lines are required. Thus, for an 279 mm (eleven inch page), 3300 lines are required. If the print head can make ten passes over the page in one second, it would take 5.5 minutes to print the page one line at a time. This time can be reduced by printing a U.S. standard 8.5 x 11 inch sheet of paper lengthwise. This would reduce the printing time to 4.25 minutes.

One approach which has been used to reduce the printing time even further is to put multiple printing nozzles on a single printing head so that a band formed of a multiple of adjacent lines is printed simultaneously. An example of a thermal printer-plotter system which has thermal resistor elements which each form pixels and which are provided in an array of adjacent elements is described in U.S. Patent No. Re. 30,743 (originally Patent No. 4,070,680) reissued on September 15, 1981 to Shelley et al. The present invention is also usable in this type of system.

It would appear that the printing time can be reduced to any figure, at least conceptually, by making heads with any desired number of nozzles. This is conceptually possible with thermally driven jets, although the structure becomes very complex. However, it is very difficult to mount piezoelectrically driven jets on the same head so that they print in the same column on adjacent lines. A conduit connected to a reservoir of ink and controls must be connected to each nozzle. When three colors plus black are used, four jets per line are required. As the number of jets is increased, the physical requirements of head construction becomes very limiting.

In order to overcome the limitations of placing nozzles at single-line spacings, the concept of interlaced printing was developed. Representative of conventional interlaced printing are U.S. Patents 4,069,485 issued to Martin for "Bidirectional Ink Jet Printer With Moving Record Receiver"; 4,112,469 issued to Paranjpe et al. for "Jet Drop Copying Apparatus"; 4,131,898 issued to Gamblin for "Interlacing Recorder"; 4,272,771 issued to Furukawa for "Ink Jet Printer with Multiple Nozzle Print Head and Interlacing or Dither Means"; 4,593,295 issued to Matsufuji et al.; and 4,630,076 issued to Yoshimura for "Ink-On-Demand Color Ink Jet System Printer".

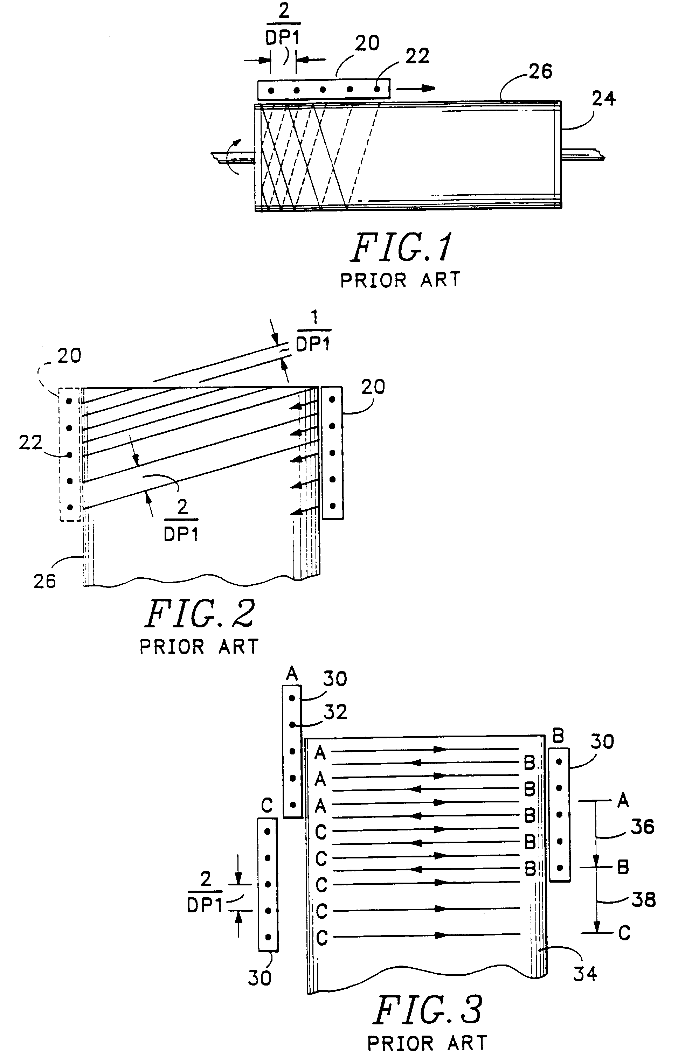

Of particular note are the patents to Paranjpe et al. and Gamblin. Paranjpe et al. disclose a printer head illustrated in Figs. 1-3 having nozzles spaced a plurality of printed line widths apart with each scan of the head printing lines interlaced with lines printed during the preceding scan.

Fig. 1 shows a simplified design of a printing head 20 having a plurality (five) of nozzles 22 spaced for printing simultaneously a plurality of lines which are not adjacent. Head 20 is positioned adjacent a drum 24 having a print medium, such as a sheet of paper 26, mounted on it. As the drum and sheet rotate, the head is moved at a constant velocity longitudinally along the drum so that all lines are printed. During each full revolution, the head advances the equivalent of 5 line spacings. Thus, on each subsequent revolution, the upper lines between lines printed on the prior revolution are printed in addition to new spaced lines, as shown. This head embodiment is also shown in Fig. 3 for printing by scanning back and forth across a planar print medium.

In these figures, one line spacing between the centers of adjacent lines is the inverse of the dot-per-inch density, or 1/DPI, two line spacings is 2/DPI, etc. In Fig. 2, head 20 is shown in dashed lines at the position at the edge of the sheet after completing a series of lines. The head is also shown in solid lines, in the same position on drum 24, ready to begin the next set of lines. It can be seen by the arrows that two lines of the next set of lines are interlaced with the preceding set of lines. All of the preceding lines are printed. Continued drum rotation results in all of the lines on sheet 26 being printed.

A printing system equivalent to that of Figs. 1 and 2 is shown in Fig. 3. In this embodiment a head 30 with nozzles 32 print alternate lines on sheet 34. However, rather than sheet 34 being on a drum and rotated, it is moved both longitudinally and laterally relative to head 30. Normally, the head shuttles back and forth across the face of sheet 34 as the sheet is advanced. After each set of lines is printed, head 30 is shifted down the sheet by an amount shown by arrows 36 and 38 which are equal in length to the width of 5 lines of print. Thus, typically head 30 is stopped at the end of each scan pass, the sheet is shifted, and the head is driven across the sheet in a reverse direction.

It can be seen that the embodiment of Fig. 3 provides in effect the same printing operation or method as that of Figs. 1 and 2. The letters at the top of the respective head positions represent the passes in alphabetical sequence. Corresponding letters are applied to the beginning of lines printed during each pass. The print head shown must scan the sheet being printed many times in order to print an entire image.

Gamblin extended the concept of Paranjpe et al by, in essence, providing a plurality of subheads, with each subhead formed as a Paranjpe et al print head. The subheads are distributed along a sheet with each subhead providing interlacing of lines printed by the same subhead, except for terminal lines which interlace with the first set of print lines of the next adjacent subhead.

This approach provides for improved speed over the print head of Paranjpe et al, however it requires an overall print head that is at least half the image window in length between the first and last subheads.

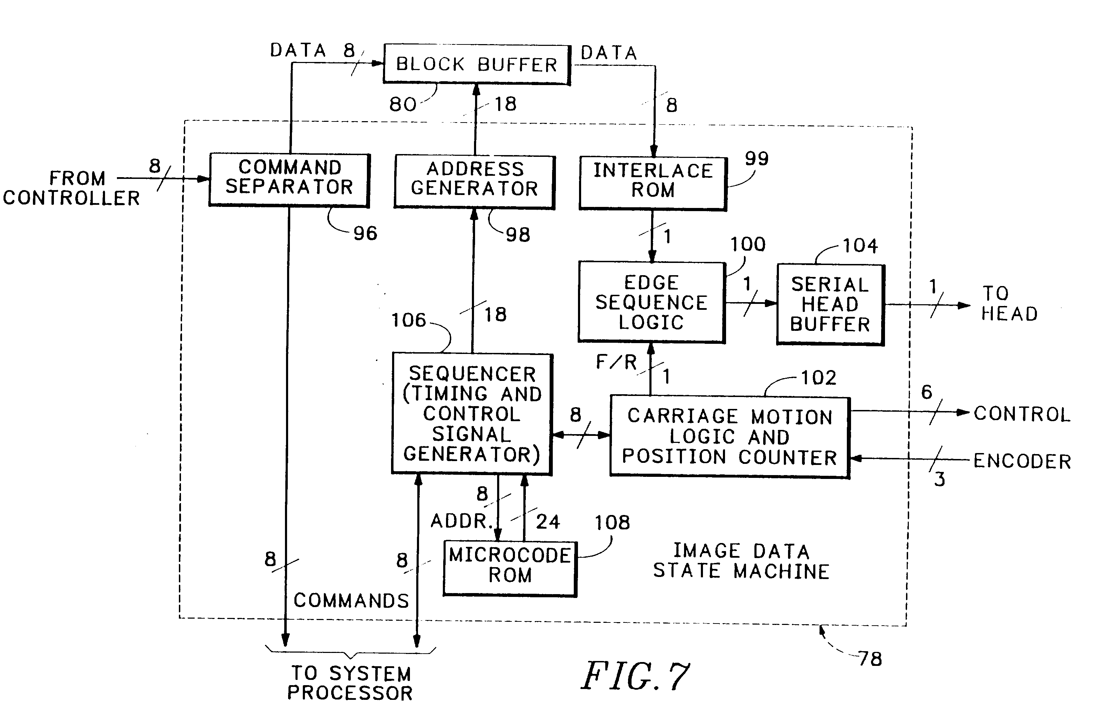

US-A-4 232 324 discloses, a method of, and an apparatus for, printing an image on a print medium along print lines having centres spaced a predetermined interline distance from the centres of adjacent print lines, the method comprising printing simultaneously a first plurality of line sets (N-45, N-47; N-46, N-48) each of a plurality of lines spaced apart a first predetermined distance one line from another of the set, the distance between each set and the next line set in the plurality thereof being a second predetermined distance greater than one interline distance (see Figure 7, A-11) and the lines forming each set of lines being adjacent print lines on the print medium; and subsequent of printing the first plurality of line sets, printing simultaneously a second plurality of line sets each having the same number and spacing of lines therein as the sets of the first plurality, and at least one line set of the second plurality of line sets being printed between the lines of an adjacent line set from the first plurality of line sets.

The following is a summary of the invention.

The present invention provides a method and apparatus for printing a plurality of lines on a print medium simultaneously. Further, it does so in a way that provides for simultaneous printing of a plurality of sets of lines. The sets of lines are completely interlaced so that heads of convenient size may be formed and replicated to produce an image of any desired size.

The preferred embodiment and method of practicing this feature of the present invention further provides for printing lines so that the print head progresses along the print medium at a uniform rate per scan or scan cycle, either by shuttle or drum rotation. In its preferred form, it also prints every line without duplication of any line.

In a preferred apparatus and method of practicing the present invention, at least a first and a second set of a plurality of lines spaced a first predetermined distance apart within each set are printed, the distance between the first and second sets being a second predetermined distance. Subsequently to printing the first and second sets of lines, at least a third and a fourth set of a plurality of lines having the same number and spacing of lines as the first and second sets are printed, with at least one of the third and fourth sets of lines being printed between first and second sets of lines.

Each set of printing elements within the print head are spaced to print adjacent lines on the print medium. An embodiment also includes spacing the nozzles within each set to provide overlapping of sequentially adjacent sets of lines.

In another aspect of the invention, the head is shifted along a sheet between printing of simultaneous sets of lines by a distance equal to the number of lines simultaneously printed times the interline distance.

Thus, the present invention provides the flexibility of structuring a head as a pluality of subheads for simultaneously printing a plurality of sets of lines, with the sets, and optionally with the lines between sets, being interlaced. In this way extended head structure is possible independent of the expected printed image size.

Preferred embodiments of the invention will now be described, by way of example only, reference being made to the accompanying drawings, in which:-

Fig. 1 is a simplified illustration of a conventional drum printer.

Fig. 2 is a face view of the head and print medium of Fig. 1.

Fig. 3 is a view similar to that of Fig. 2 showing an alternative conventional embodiment.

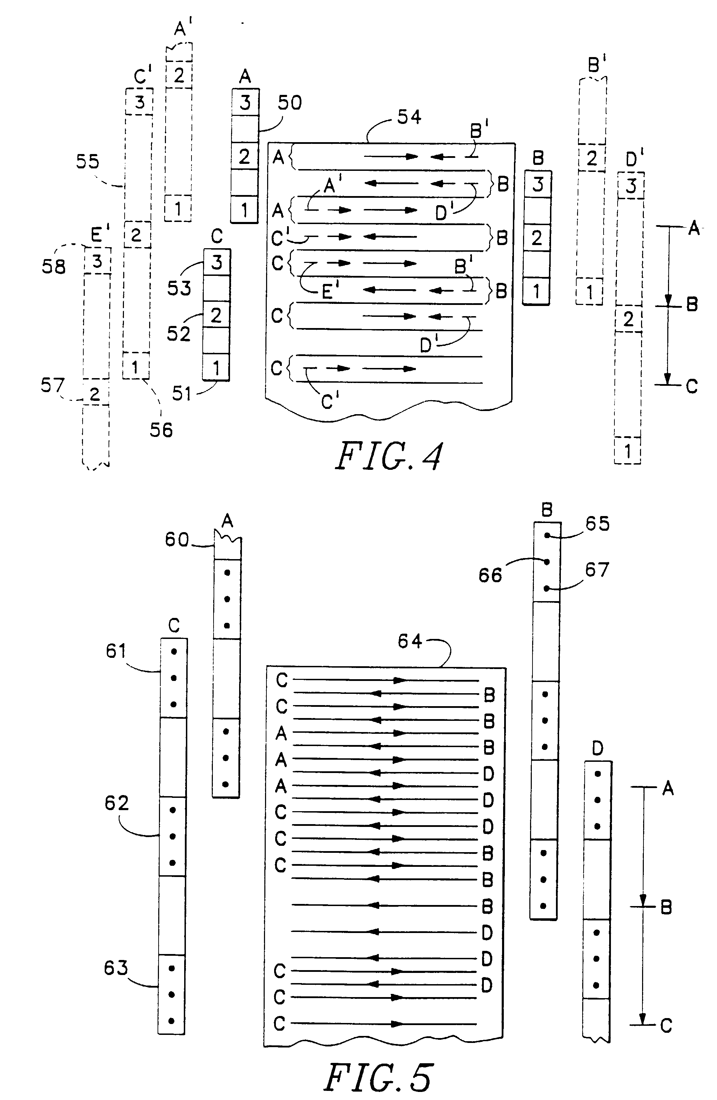

Fig. 4 is a view similar to that of Fig. 3 showing a preferred head design for practicing the present invention.

Fig. 5 is a view similar to that of Fig. 4 showing a preferred head design which is a combination of the designs of Figs. 3 and 4.

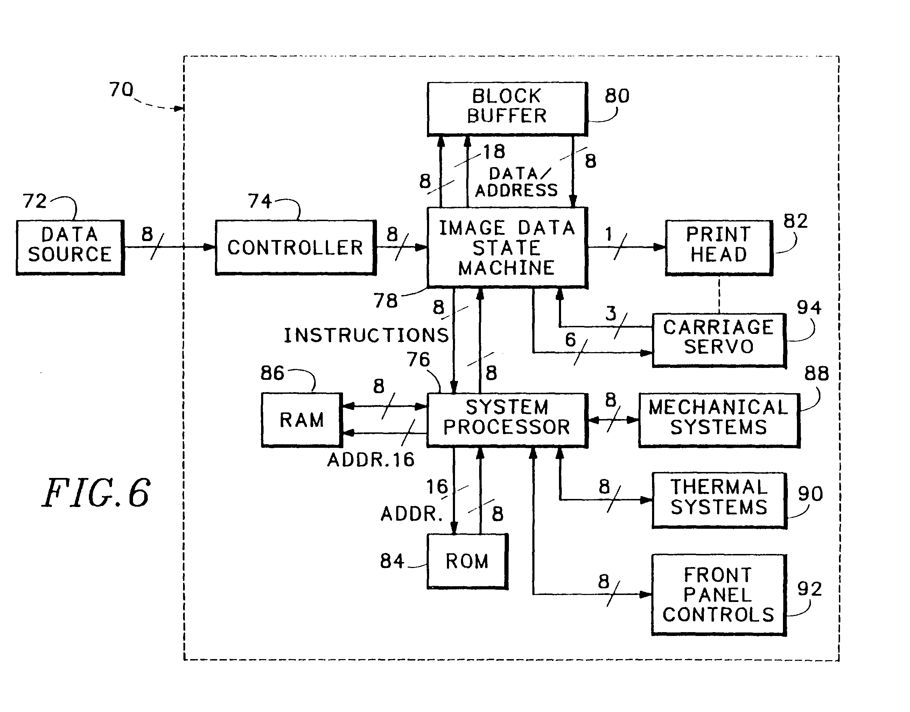

Fig. 6 is a general block diagram illustrating an apparatus made according to the present invention for printing as illustrated in the previous figures.

Fig. 7 is a more detailed block diagram of the image data state machine shown in Fig. 6.

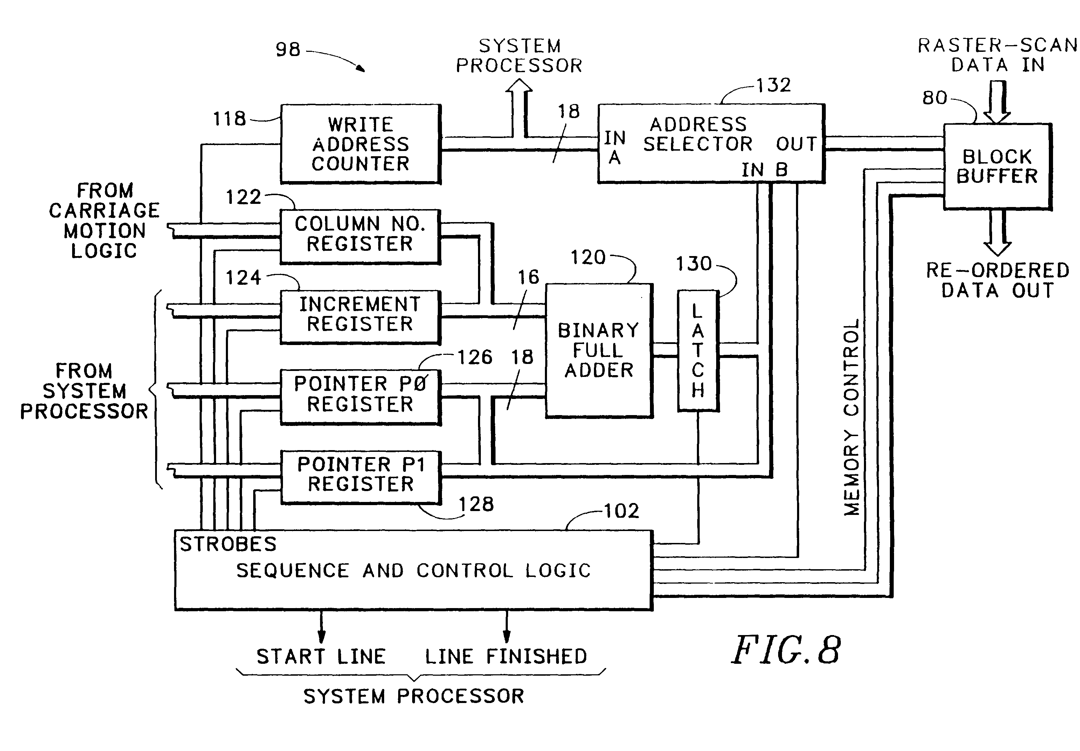

Fig. 8 is a schematic of the address generator and sequencer of Fig. 7.

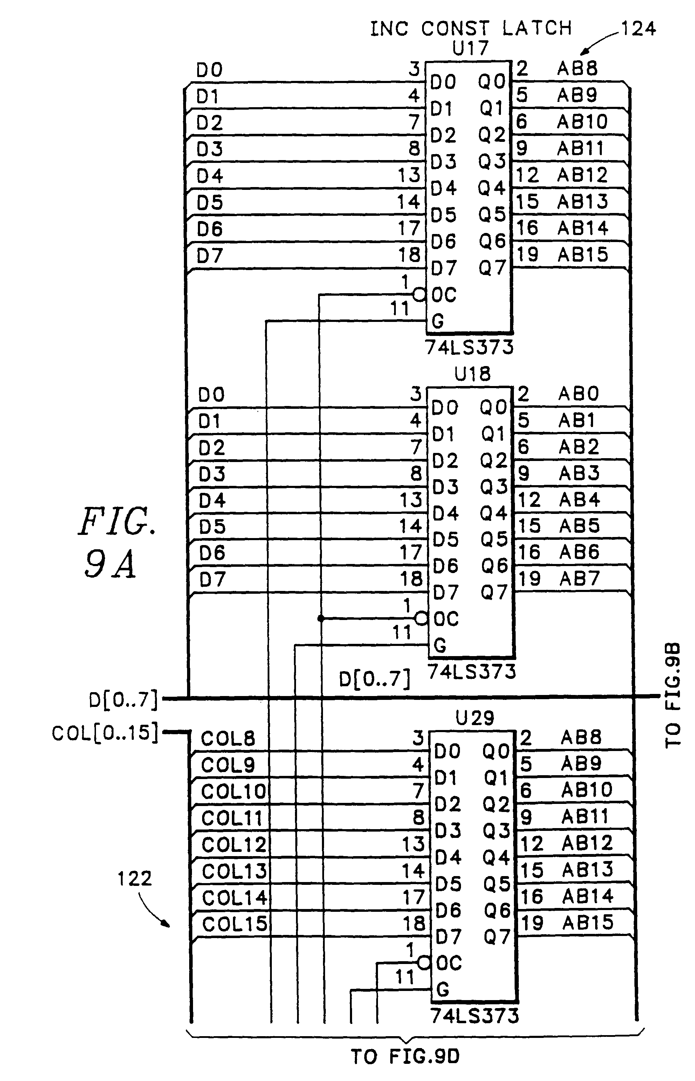

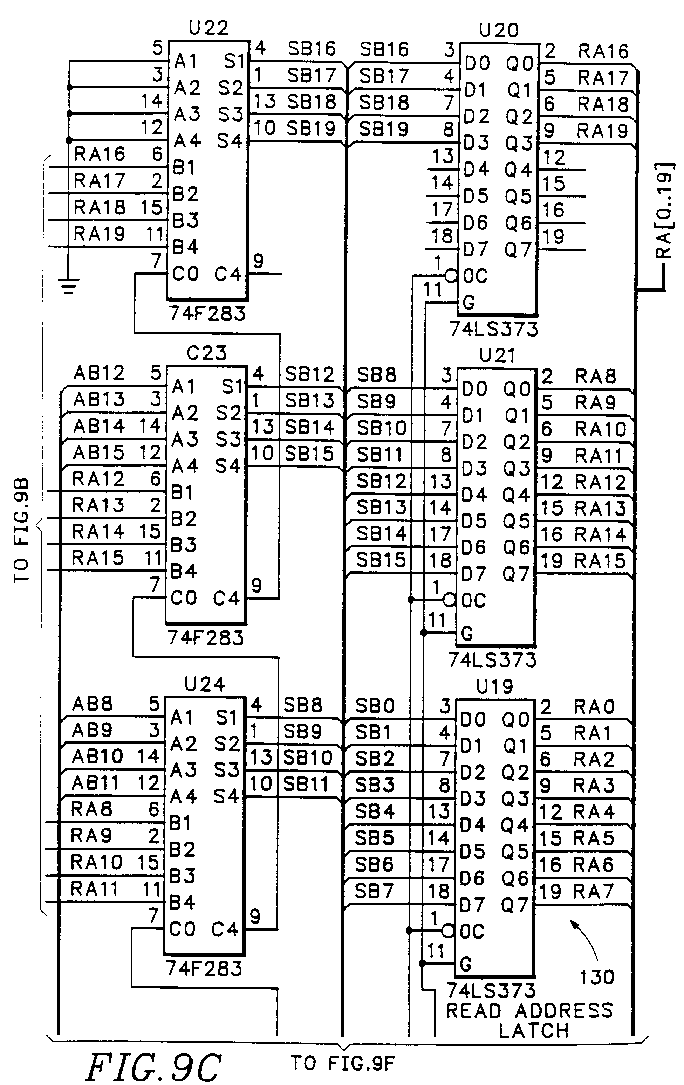

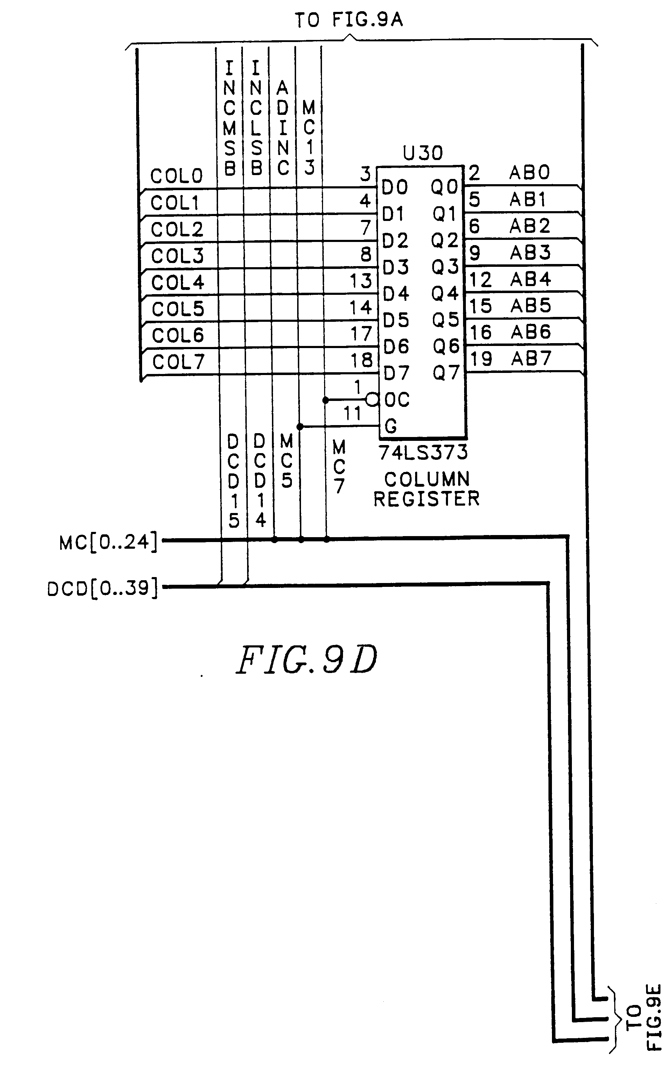

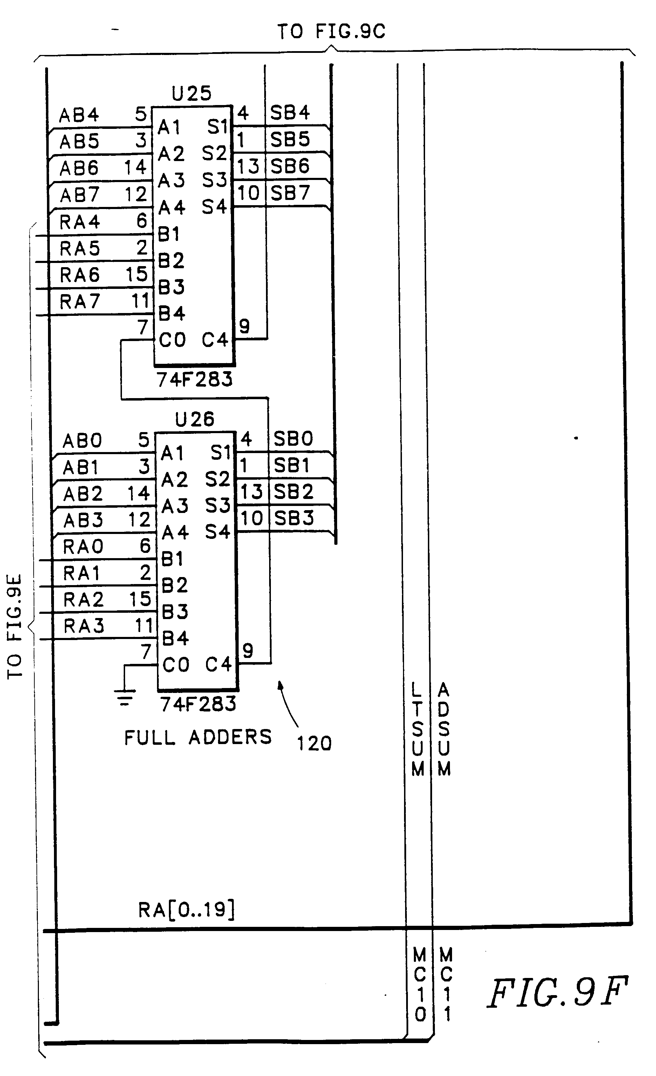

Figs. 9A to 9F form a circuit schematic corresponding to the apparatus of Fig. 8.

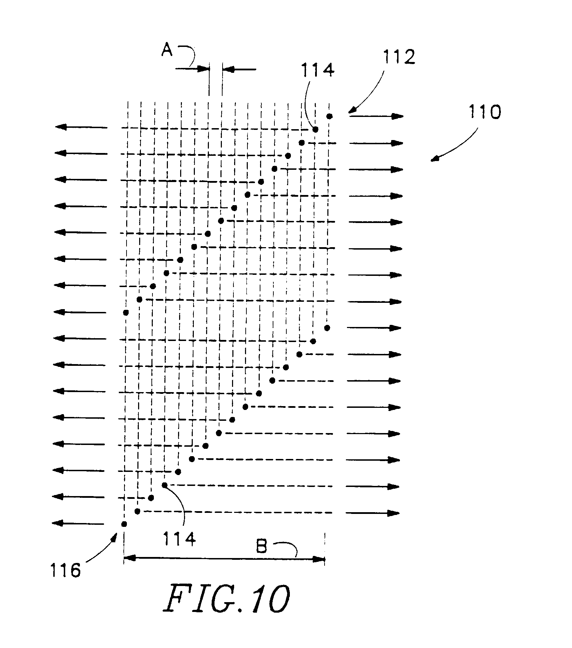

Fig. 10 is a further diagram of a specific ink-jet head array usable with the apparatus of Fig. 6.

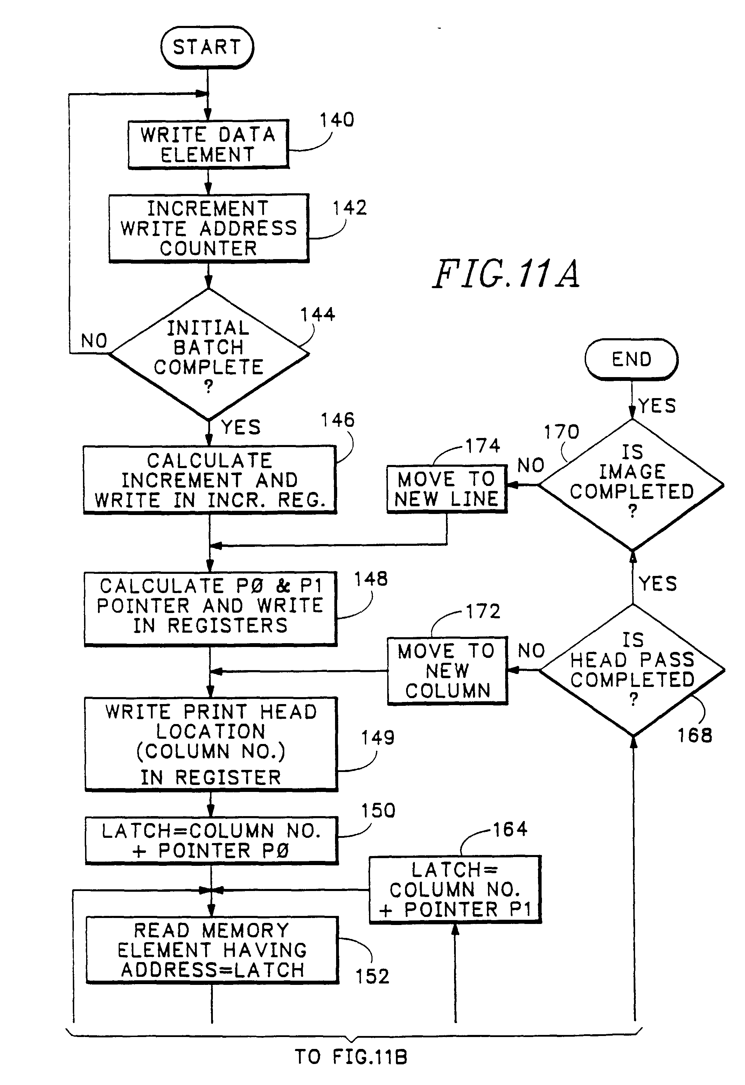

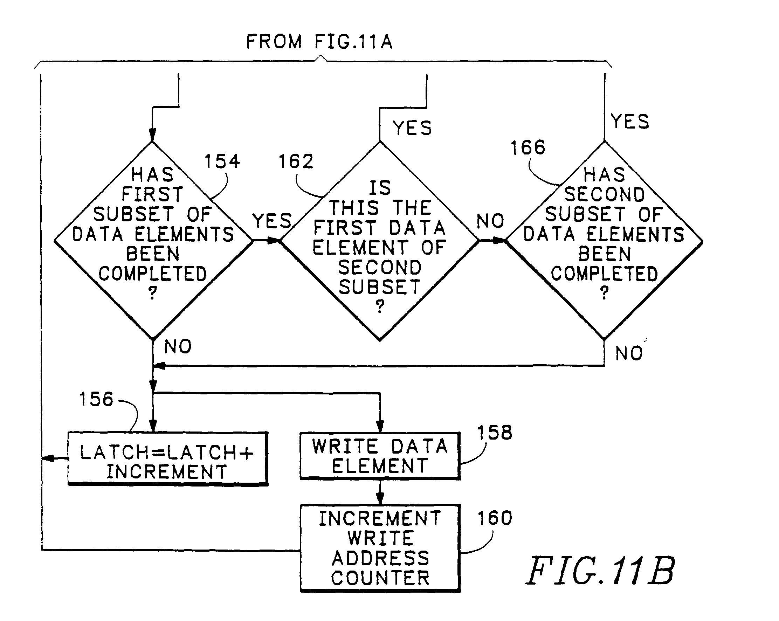

Fig. 11 is a flow chart illustrating the data reformatting operation of the apparatus of Fig. 6.

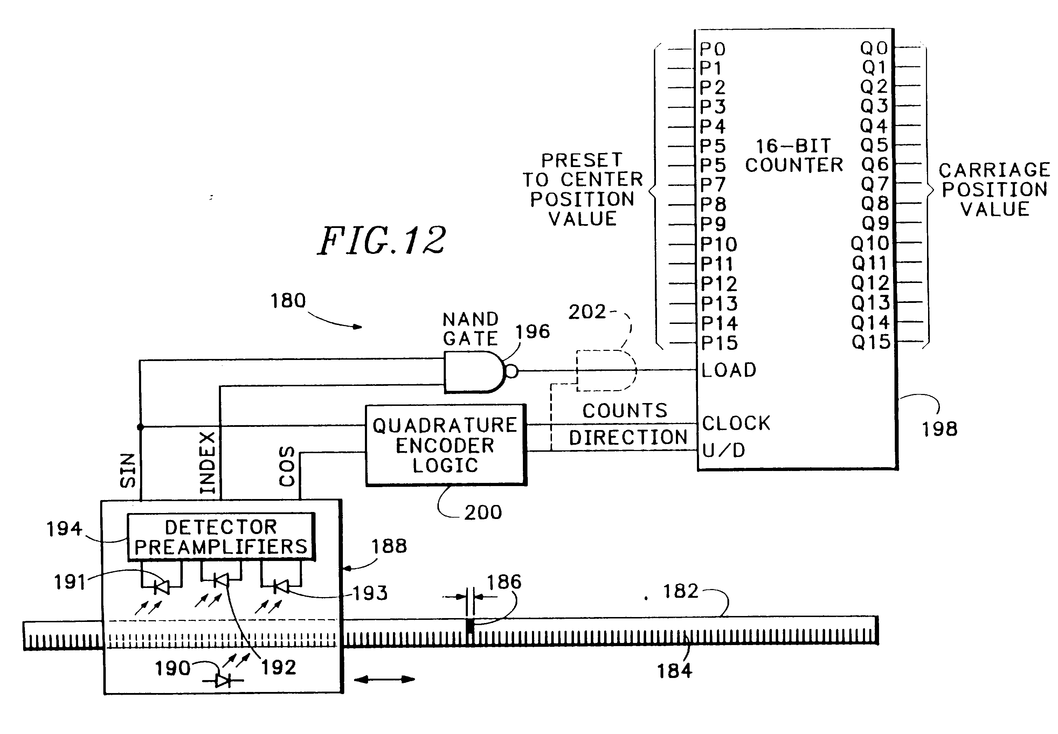

Fig. 12 is a diagram illustrating structure of a position encoder included in the apparatus of Fig. 6.

A preferred embodiment for practicing interlaced set printing according to the present invention is shown in Fig. 4.

A head 50 is formed of subheads 51, 52 and 53 (listed as 1, 2 and 3 in the figure). Each subhead prints a set of adjacent lines represented by the bracketed regions on a sheet 54 of a print medium. Again, the letters designate the alphabetical sequence of scans by head 50 across sheet 54. The solid arrows on the sheet indicate the direction of scan for the corresponding region.

The subheads forming head 50 are spaced apart by the same distance as the region scanned by each subhead. The area of sheet 54 printed by subhead 52 during scan B is adjacent areas printed by subhead 51 during scan A and by subhead 53 during scan C to completely fill in the overall area. The head is advanced the equivalent of three subhead regions, between scans.

A second embodiment of the subhead structure is illustrated by head 55 shown in dashed outline, including subheads 56, 57 and 58. The subheads print the same region width as the subheads of head 50. However, these subheads are the equivalent of four subhead widths apart. The corresponding scans are represented by the alphabet labels with a prime, such as A′, and the scans are represented by arrows formed with dashed lines within each scan region. Even though the subheads are spaced farther apart, the head advances the same incremental distance relative to the sheet between scans.

Printing incorporating interlaced line printing in the interwoven band or set printing of Fig. 4 is shown in Fig. 5. A head 60 formed of subheads 61, 62 and 63 is scanned over a sheet 64 of print medium. Each subhead has a series of three nozzles 65, 66 and 67 spaced the equivalent of two lines apart. The subheads are spaced the equivalent of seven lines apart. The head is advanced the equivalent of nine lines between scans, the same distance as the number of nozzles in the head.

Yet another example, not illustrated, is a head having twelve subheads with nine lines between two nozzles in each subhead and 101 lines between subheads. Each nozzle prints alternate 100 lines. The head spacing is ample to facilitate nozzle location at the desired spacing.

It will be appreciated that the examples of printing illustrated are simplified versions of heads that would be constructed in order to achieve higher printing speeds. The structure illustrated certainly provides for increased nozzle spacing which facilitates actual positioning without the physical limitations imposed by close spacing of a large number of nozzles.

Fig. 6 is a block diagram of a printer 70 usable to perform the printing described with reference to Figs. 4 and 5. Printer 70 receives data from a data source 72 at a controller 74. This controller acts as a communication interface with the data source.

From controller 74, the data is input into an image data state machine 78 which writes the data by sequential address in a block buffer (RAM) 80, also referred to as a partial page memory. The incoming data is conventionally in a raster-scan format. It is read out of buffer 80 for printing by a print head 82 in a sequence corresponding to the physical configuration of the print head array.

System processor 76 provides overall control of printer 70. It typically includes an operating program stored in a ROM 84 and retrievably stores information being processed in a RAM 86. The system processor receives dynamic information from the printer mechanical systems 88, thermal systems 90 and front panel controls 92. State machine 78 also exchanges positional information with a print head carriage servo 94 for coordinating data reading with print head position relative to a print medium.

Fig. 7 shows in further detail the structure of state machine 78 which controls writing and reading of pixel data. The information is received in a command separator 96 from controller 74. The command separator identifies the information as either data or system commands. The commands are routed to system processor 76. The data is fed into and out of block buffer 80 at addresses determined by an address generator 98. The data is read out into an interlace ROM 99 which functions, using a look-up table, to select the appropriate bit from each stored 8-bit data word to be used to control whether each jet will print. In special circumstances, the interlace ROM can be replaced by combination logic using the same inputs and outputs.

The eight bits of data coming from the block buffer contain two 4-bit pixels, each of which has 1 bit for each of the primary colors black, cyan, magenta and yellow. The eight bits of input to ROM 99 consist of seven bits of jet number, one bit of read address, and a mode selection. The seven bits of jet number select which of the four color bits are routed to the one-bit serial output.

Printer nozzle print suppression, which provides printing only on the image region of a print medium, is controlled through an edge sequence logic circuit 100 receiving position and direction (forward/reverse) signals from a position counter circuit 102. This circuit sends control information to the carriage servo circuit and receives position information from an encoder attached to the carriage.

This 1-bit data path continues through the edge sequence logic to a serial head buffer 104. This buffer functions as temporary storage of the 98-bit serial data stream coming from logic circuit 100 prior to sending it to the head.

A sequencer 106, also referred to as a timing and control signal generator, responds to supervisory commands from the system processor under the direction of a microcode stored in a ROM 108. The sequencer controls the generation of read and write addresses in address generator 98 to provide the data reformatting necessary to send the corresponding pixel data to the print head. This is coordinated with the print head carriage position provided through carriage motion logic and position counter circuit 102.

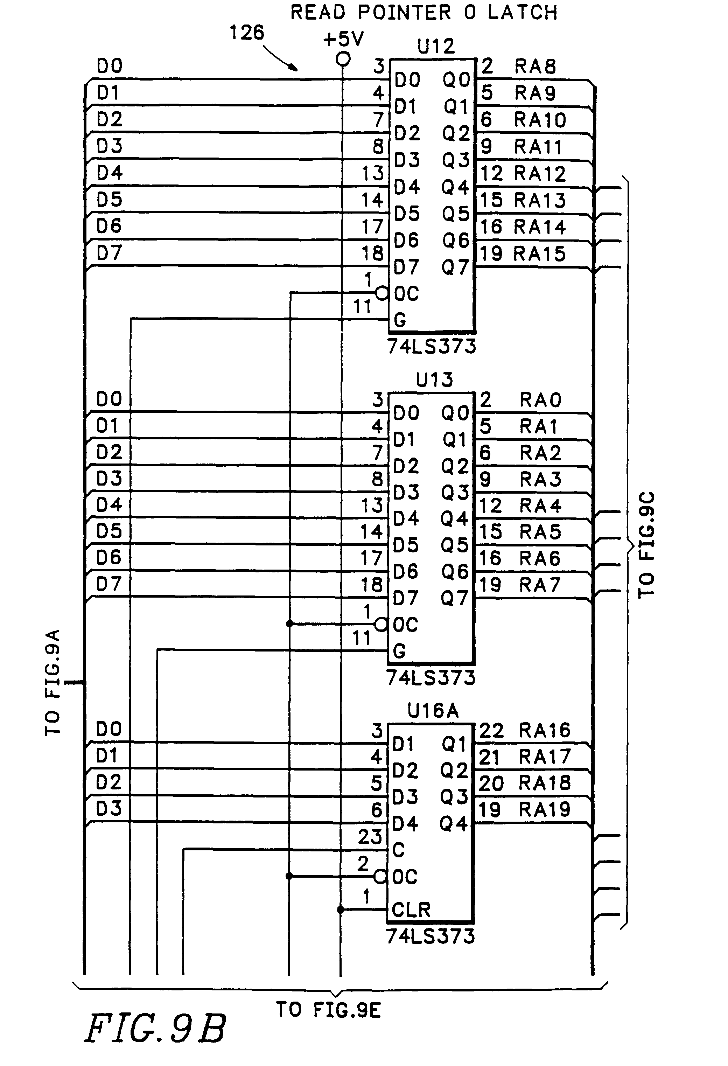

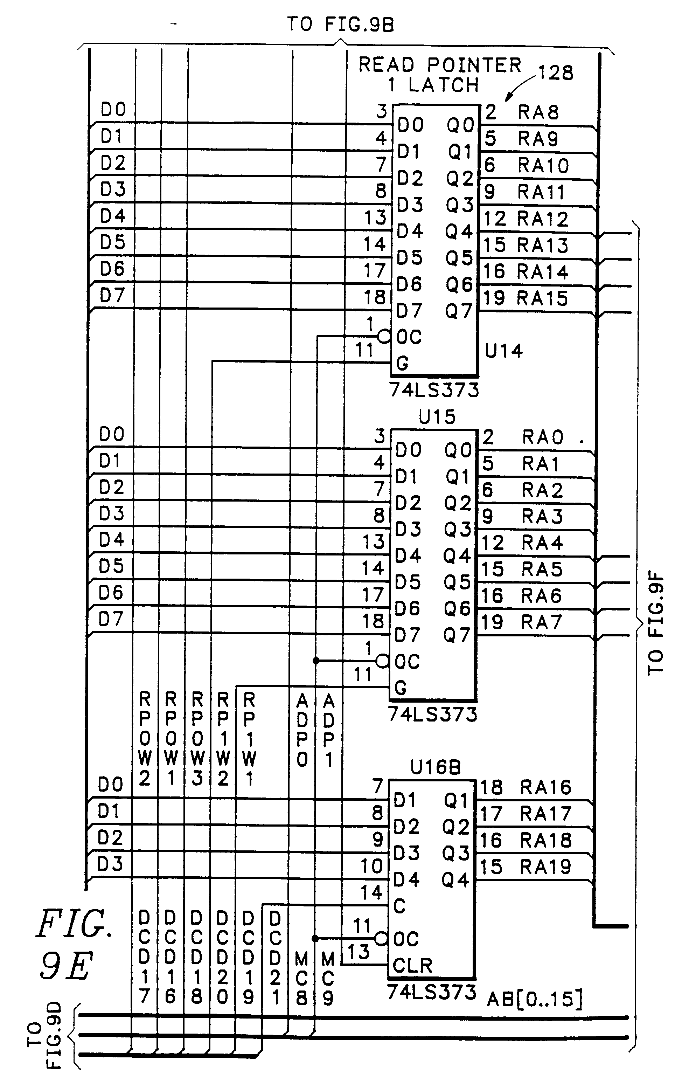

Fig. 8 shows in further detail the structure of address generator 98, with a portion of the specific circuit schematic shown in Figs. 9A and 9B. This embodiment is designed to control printing of a head nozzle array 110 shown in Fig. 10. Array 110 includes a first subset 112 of nozzles 114 wherein each nozzle within the subset is offset from each adjacent nozzle a horizontal distance A and a vertical distance of one line. A second subset 116 has the same number of nozzles 114 and same relative positioning of nozzles within the subset. However, the top nozzle of the second subset is offset from the bottom nozzle of the first subset by a horizontal distance B (in pixel spacings or addresses) and a vertical distance of one line. The address offset of the top nozzle of the second subset is thus equal to the total number of pixel locations in a line + B from the last nozzle of the first subset.

In the actual embodiment, the distance A is equal to the width of ten pixels (or pixel locations). If a line contains 3000 pixels, then each nozzle is 2990 pixel locations sequentially from the next preceding pixel location within the subset. The preferred head also prints with alternate nozzles when the head scans one direction and with the remaining nozzles when the head scans the other direction. Thus, it is only necessary to move the actual head relative to the print sheet on alternate scans. However, the addressing of printing heads in any scan direction then accommodates this increase in the effective spacing of the heads. The set interlaced printing illustrated in Figs. 4 and 5 is provided by increasing the spacing between subsets 112 and 114. Also, in the actual embodiment, each subset contains 48 nozzles, and the two subsets are spaced horizontally from each other rather than vertically, as shown. This embodiment is useful for providing a capability of both black (one subhead) and color (the other subhead) printing. Within the color subhead, three basic colors, such as the three subtractive printing colors of cyan, magenta and yellow, can be provided by multiple sets of three consecutive nozzles within the subhead or by three blocks of nozzles within the subhead. This then is a form of interlaced printing.

Printer 70 can accommodate either design. With little modification, it will be seen that other designs can also be accommodated. For instance, the designs of Figs. 4 and 5 are accommodated by adjusting both the increment value within a head or subhead, and the offset between subheads.

Incoming raster-scan format data is written into block buffer 80. The addresses that govern the memory locations that the incoming data is written into are generated by a simple write address up-counter 118 that is incremented each time that a data byte is written into memory. Thus the pixel data is written into the memory starting at location 0 in the same order in which it comes in from the controller or data source. The system processor can at any time read the current value of the address counter to determine how much data is stored in the memory.

When the block buffer memory contains enough data to allow printing to begin, the data reformatting process begins. From this point on the reformatting process and memory access are under control of the sequence and control logic of sequencer 106. This control is provided by the microprogram stored in ROM 108.

Reformatting the pixel data is accomplished by computing the addresses from which the pixel data is to be read in a particular order, different from the sequential order in which the data was written. This address calculation is performed by a binary full adder 120 using numbers from a column number register 122, an increment register 124, a pointer P0 register 126, and a pointer P1 register 128 in combination with the previous calculated address, stored in a latch 130. An address selector 132 selects between the address in write address counter 118 and latch 130, depending on whether data is being written into or read out of block buffer 80.

The column number register stores a number provided by logic circuit 102 which controls the print head position, and is defined as the number of the pixel location (column) in from the left edge of the image that lies under the right-most nozzle of the first subset of nozzles of the print head. The numbers in the other three registers are calculated and stored by the system processor. The number in the increment register remains constant for the entire image, and is related to the image width and print head design. For the particular print head mention previously, it is equal to the image width (in pixel locations) - A. In the embodiment described above, it is 3000 pixel locations - 10, or 2990. In the embodiment shown in Fig. 10 where A is equal to the width of one pixel location, the increment value is 2999 if all nozzles are used.

The numbers in the pointer registers are used to relate the current read address to the address at which the data was originally written. When the first printing position of the print head is established for the current pass in an image printing operation, the number in pointer P0 register is the memory address of the first pixel location in the top line of the portion of the image to be printed. For a split head array as actually used in this embodiment having vertically spaced nozzle subsets, the value in the pointer P1 register corresponds to the value in the P0 register minus the horizontal offset B, which is the offset between the two rows of jets in the print head. For the head array shown in Fig. 10, the value in the pointer P1 register corresponds to the line length in pixel locations plus the offset B.

Fig. 11 is a flow chart showing the various steps in printing an image. Incoming data elements are written at block 140. The write address counter is incremented at block 142 and a decision is made at decision block 144 on whether enough data is written to begin printing. If not, then another incoming data element is written at the last incremented address.

If the initial batch of data is written into memory, the increment A is calculated and written into the increment register at block 146. The values for pointers P0 and P1 are calculated and entered into the corresponding registers at block 148. The print head location, as a column number, is entered into the column number register. An initial read address is entered into latch 130 which is equal to the sum of the column number and pointer P0 registers at block 150. The memory element having this address is read from memory at block 152.

If the first subset of data elements, as determined at decision block 154, has not been read, then the new read address in latch 130 is set equal to the prior address plus the increment value, at block 156. Concurrent with this process, another incoming data element is written into memory and the write address counter incremented at blocks 158 and 160. The newly addressed memory data element is then read at block 152 and a determination made again whether the first subset of pixel data elements has been read.

If so, a determination is made at decision block 162 as to whether this next data element to be read is the first data element of the second subset. If it is, then the address in latch 130 is set equal to the column number plus the value of pointer P1 register, for the actual head embodiment having two vertically spaced nozzle subsets. For the embodiment of Fig. 10, the latch is set equal to its prior value plus the offset of pointer P1. The data element at this memory location is then read and the address values incremented and read as with the first subset of data elements until the end of the second subset is reached. This determination is made at decision block 166.

Once the end of the second subset of nozzle positions is reached, a determination as to whether the current pass of the print head is complete is made at block 168. If so, and the image has not been completed, as determined at block 170, then the print head is moved to a new column for the current pass at block 172. The new column number is written in register 122 at block 149 and the process continued until the had pass is completed.

At the end of each head pass a determination is made at block 170 to determine if the image is complete. If not, the head is moved to position for a new set of lines and a new pass at a block 174. The steps previously outlined beginning with setting the P0 and P1 pointers at block 148 is continued until the image is completed, at which point the printing process is terminated.

The design of the memory array, referred to as block buffer 80, used with the above pixel reformatting logic poses some special challenges. It was not considered desirable to make the memory array large enough to store an entire image at one time, due to the very large size and consequent high cost of such a memory. It was therefore necessary to find a way to use a smaller and partial-page memory for temporary storage during the pixel reformatting process. The reformatting must be accomplished without losing the relationship between the write and read addresses, and without complicating the algorithm used to handle the pixel reformatting.

Memory 80 has a size which is less than enough to print an entire page or image. When sufficient data has been entered to fill the memory, it wraps around from the end back to the beginning, together with dynamic read and write pointers. The wrap-around feature of the memory is achieved by generating the write addresses with a simple up-counter that is matched in length to the memory length. For example, if the memory is structured as 256K of 8-bit words, the associated write counter is configured to overflow at a count of 256K (262144). Thus, when the last byte of memory is written, the next byte to be written will be at address 0.

To use a memory such as this, it is necessary to keep track of the pointers. Memory addresses have significance only with respect to these pointers. In other words, data is written at locations starting with or relative to a write pointer, and data is read at locations related to or starting with a read pointer. Keeping the correct relationship between the read and written data thus reduces to a problem of keeping the two pointers the correct number of address locations apart in memory. In the preferred embodiment described, this is done by the system processor. The read pointer starts at location 0. External logic allows data to be written to the memory and the write pointer counter 118 is incremented as described with reference to Fig. 11, until the write pointer is a set number of pixel data elements beyond the read pointer. In the preferred embodiment, this set number is 50 lines times the number of pixel locations that the image is wide, such as 3000 pixel locations. Since the print head prints on 48 consecutive lines, this assures enough data elements for a complete pass. This is the value of the initial batch of data elements read into memory as described in the flow chart of Fig. 11.

During the reading and printing cycle, enough new data bytes are written to memory to allow the next head pass also take place. At the end of the current pass, the system processor checks the value of the write pointer, inputting additional data as required, so that it is again at least the same set distance ahead of the read pointer. Thus, pixel data is always decoded with respect to the read pointer stored in the pointer P0 register 126, and the pixel reformatting logic need not be concerned with absolute memory addresses at all.

By using this partial page memory concept, the minimum size for a memory is much reduced from that for a full page. The minimum size for the memory becomes approximately two times the number of addresses between the read and write pointer. Since two pixel data elements can be stored at each 8-bit address location, this is equivalent to 300K of storage elements, or 150K of memory. Thus, the 256K memory is ample to accommodate this method.

A key requirement for the proper operation of the memory as described is that any logic devices or software operations that can affect the memory address must be arranged so as to overflow all at the same value. Thus, if the memory consists ot 256K words, the memory address counter, the binary full-adder 120, and the software algorithms that compute read pointers must all be designed so as to overflow to 0 when the count reaches 256K.

Fig. 12 illustrates the structure of an encoder 180 made according to the invention. The encoder includes a linear relative position strip 182 having a plurality of incrementally spaced markers 184 positioned along it. Strip 182 is long enough to more than cover the maximum width that a print medium image will have. Strip 182 is attached to a frame which stays fixed relative to the print medium.

An index marker 186 or flag is preferably positioned centrally of the strip to identify this fixed position on the strip. This index marker is used to calibrate the carriage position sensing system, as described in the Summary of the Invention in order to correct for any errors in position sensing due to mechanical vibration or electronic noise, and to assure that these variances are not cumulative.

A position marker sensing unit 188 is fixed relative to the print head on the printer carriage and travels along strip 182 so that markers 184 and 186 are sensed. Included is a light emitting diode 190 and corresponding photodiodes 191, 192 and 193. Diodes 191 and 193 are positioned to sense the incremental markers 184 in such a way that they produce signals that are 90° out of phase. Diode 191 is shown to produce a sine wave signal relative to the cosine wave signal of diode 193. Diode 192 senses the occurrence of index marker 186 in a way that is synchronous with the sine wave signal generated by diode 191.

The photodiode signals pass through appropriate amplifiers 194. The sine wave and index signals pass through a NAND gate 196 and the resultant signal is input into the load port of a 16-bit counter 198. The counter has the 16 bits of input preset to a position value that represents the position of index marker 186. The two cosine and sine wave signals also pass through a quadrature encoder logic circuit 200 to obtain a signal identifying the occurrences of markers 184, which is input into the clock port of counter 198. A second signal indicative of the direction of the carriage is fed into the up/down count control port of the counter, so that the count in the counter changes in a manner consistent with the direction of travel of the carriage.

In operation, when the marker sensing unit moves past the index marker, a "high" signal is generated at the "index" output. Because the width of the index mark is equal to the width of the incremental marker spacing, it overlaps two adjacent output clock transitions. By including the NAND gate as shown, only one of these clocks is selected and is sent to the counter. Because of the nature of the 16-bit counter, the data present at the "preset" inputs of the counter will be preset into the counter and will appear at its output on the next rising edge of the clock after the load input goes low. The number present at the preset inputs of the counter can be chosen so that any possible position of the carriage corresponds to a positive count position greater than 0. This greatly simplifies the position control system.

Once the carriage has passed the index marker causing the counter to be preset, it can move forward and back as desired, and the outputs of the counter count up and down accordingly. In the absence of noise, interference, etc., the next time the counter moves past the index marker the value in the counter outputs equals the value that gets preset by the marker, resulting in no net effect caused by the presence of the marker. However, if the counter has accumulated any net position errors for any reason, these errors are removed and the counter again preset to the proper value upon passing the index marker.

As shown in Fig. 12, index marker 186 is preferably located in the middle of strip 182 which represents the middle of travel of the carriage between the sides of images to be printed. Thus, regardless how narrow an image is printed, so long as it is printed at least at the center of the page of print medium, the index marker will be sensed with every scan of the carriage. Certainly other positions would produce the same result, depending on the minimum image width printed.

An alternative embodiment of the generation of the "load" signal for the counter is shown in dashed lines in Fig. 12. In this embodiment, an AND gate 202 is located between NAND gate 196 and the load port of the counter. The AND gate receives the output of gate 196 as well as the direction signal from quadrature encoder 200. This allows the presetting of the counter to only take place during the reverse direction pass of the carriage, and inhibits it during the forward pass, which may be desirable in some circumstances.

It will be seen that this encoder provides incremental counting with an absolute position reference that is rechecked every time the encoder passes the center (or other equivalent point) of travel, and that positive only position values are generated for any position within the range of the carriage. Such a position referencing scheme eliminates the need for the counter to ever reach a value of zero.

Our copending European Patent Application EP-A-0 422 924 discloses a method and apparatus for reformatting data representing images for printing by a print head having a plurality of print nozzles. The method and apparatus have utility in the method and apparatus described herein. Our copending European Patent Application EP-A-0 422 926 discloses a reciprocating-element position encoder having utility in the method and apparatus described herein.

## Claims

1. A method of printing an image on a print medium (54, 64) along print lines having centers spaced a predetermined interline distance from the centers of adjacent print lines, the method comprising printing simultaneously a first plurality of line sets each of a plurality of lines spaced apart a first predetermined distance one line from another of the set, the distance between each set and the next line set in the plurality thereof being a second predetermined distance greater than one interline distance and the lines forming each set of lines being adjacent print lines on the print medium (54, 64); and subsequent to printing the first plurality of line sets, printing simultaneously a second plurality of line sets each having the same number and spacing of lines therein as the sets of the first plurality, characterised in that at least one line set of the second plurality of line sets is printed between the sets of a pair of adjacent line sets in the first plurality of line sets.

2. A method as claimed in Claim 1 and comprising the steps of:-
(i) printing simultaneously at least a first set and a second set of a plurality of lines spaced a first predetermined distance apart, the distance between the first and second sets being a second predetermined distance greater than one interline distance, and the lines forming each set of lines being adjacent print lines on the print medium (54, 64) and
(ii) subsequently to printing the first and second sets of lines, printing simultaneously at least third and fourth sets having the same number and spacing of lines as the first and second sets, at least one of the third and fourth sets being printed between the first and second sets.

3. A method as claimed in Claim 2 and including the step subsequent to printing the third and fourth sets of printing simultaneously at least fifth and sixth sets having the same number and spacing of lines as the first and second sets, with at least one of the fifth and sixth sets being printed between the first and second sets.

4. A method as claimed in Claim 2 or Claim 3 and including the step of printing simultaneously an additional plurality of sets entirely outside of the first and second sets.

5. A method as claimed in any one of Claims 2 to 4 wherein the step of printing the third and fourth sets includes the step of positioning the third and fourth sets relative to the print medium (54, 64) a distance from the position of the first and second sets equal to the number of lines simultaneously printed multiplied by the predetermined interline distance.

6. A method as claimed in any one of Claims 2 to 5 wherein the step of printing the third and fourth sets includes printing at least one line of the third and fourth sets between lines of at least one of the first and second sets.

7. An apparatus for printing an image formed of lines printed selectively over a predetermined area of a print medium (54, 64), which lines have centers spaced a predetermined interline distance apart, the apparatus comprising a print head (82) movable relative to the print medium and having a plurality of printing elements (51, 52) structured for printing simultaneously a corresponding plurality of sets each of a plurality of adjacent print lines spaced a first predetermined distance on line from another, the distance between each set and the next line set in the plurality thereof being a second predetermined distance greater than one interline distance; and means (78) for effecting relative movement between the print head (82) and the print medium in a sequence of print passes in a manner whereby a first plurality of line sets are printed simultaneously during a first print pass and a second plurality of line sets are subsequently printed simultaneously during a second print pass, characterised in that the apparatus is constructed and arranged so that at least one line set of the second plurality of line sets is in operation of the apparatus printed between the sets of a pair of adjacent line sets in the first plurality of line sets.

8. An apparatus as claimed in Claim 7 wherein the print head (82) has at least a first set (51) and a second set (52) of a plurality of printing elements structured for printing simultaneously corresponding sets of a plurality of adjacent print lines, the distance between the sets printed simultaneously being a second predetermined distance greater tahn one interline distance; and wherein the means (78) for effecting relative movement between the print head (82) and the print medium (54, 64) is means (78) for moving the print head relative to the print medium (64, 54) in a manner whereby at least a first set and a second set of lines are printed simultaneously during a first pass of the print head relative to the print medium (54, 64), and a third set and fourth set of lines are printed simultaneously during a second pass with a least one of the third and fourth sets being printed between the first and second sets.

9. An apparatus as claimed in Claim 8 wherein the movement means (78) moves the print head (82) for printing simultaneously, subsequently to printing the third and fourth sets, at least a fifth set and a sixth set of a plurality of lines, with at least one of the fifth and sixth sets printed between the first and second sets.

10. An apparatus as claimed in Claim 8 or Claim 9 wherein the movement means (78) moves the print head (82) for printing simultaneously an additional plurality of sets entirely outside the first and second sets.

11. An apparatus as claimed in any one of Claims 8 to 10 wherein the moving means (78) moves the print head (82) so that for printing each combination of simultaneously printed sets, said print head is positioned relative to the print medium (54, 64) a distance from the position of the print head (82) for printing the preceding combination of simultaneously printed sets, namely a distance equal to the number of lines simultaneously printed multiplied by the predetermined interline distance.

12. An apparatus as claimed in any one of Claims 8 to 10 wherein the movement means (78) moves the print head (82) so that at least one line of the third and fourth sets is also printed between lines of at least one of the first and second sets.

## Patentansprüche

1. Verfahren zum Drucken eines Bildes auf ein Druckmedium (54, 64) entlang von Druckzeilen, welche Zentren aufweisen, die einen vorbestimmten Zwischenzeilenabstand von den Zentren benachbarter Druckzeilen beabstandet sind, wobei das Verfahren ein gleichzeitiges Drucken einer ersten Vielzahl von Zeilensätzen jeweils aus einer Vielzahl von Zeilen, die durch einen ersten vorbestimmten Abstand von einer Zeile zur anderen des Satzes beabstandet sind, wobei der Abstand zwischen jedem Satz und dem nächsten Zeilensatz in der Vielzahl davon ein zweiter vorbestimmter Abstand ist, der größer als ein Zwischenzeilenabstand ist, und die jeden Satz von Zeilen bildenden Zeilen benachbarte Druckzeilen auf dem Druckmedium (54, 64) sind, und nachfolgend auf das Drucken der ersten Vielzahl von Zeilensätzen, ein gleichzeitiges Drucken einer zweiten Vielzahl von Zeilensätzen, welche jeweils die gleiche Anzahl und Beabstandung von Zeilen besitzen wie die Sätze der ersten Vielzahl, umfaßt, dadurch gekennzeichnet, daß wenigstens ein Zeilensatz der zweiten Vielzahl von Zeilensätzen zwischen den Sätzen eines Paares benachbarter Zeilensätze in der ersten Vielzahl von Zeilensätzen gedruckt wird.

2. Verfahren nach Anspruch 1, das die Schritte umfaßt:
(i) gleichzeitiges Drucken wenigstens eines ersten Satzes und eines zweiten Satzes einer Vielzahl von Zeilen, die durch einen ersten vorbestimmten Abstand beabstandet sind, wobei der Abstand zwischen den ersten und zweiten Sätzen ein zweiter vorbestimmter Abstand ist, der größer als ein Zwischenzeilenabstand ist, und die jeden Satz von Zeilen bildenden Zeilen benachbarte Druckzeilen auf dem Druckmedium (54, 64) sind und
(ii) nachfolgend auf das Drucken der ersten und zweiten Sätze von Zeilen, gleichzeitiges Drucken wenigstens dritter und vierter Sätze, welche die gleiche Anzahl und Beabstandung von Zeilen wie die ersten und zweiten Sätze aufweisen, wobei wenigstens einer der dritten und vierten Sätze zwischen den ersten und zweiten Sätzen gedruckt wird.

3. Verfahren nach Anspruch 2, das nach dem Drucken der dritten und vierten Sätze, den Schritt des gleichzeitigen Druckens wenigstens fünfter und sechster Sätze umfaßt, welche die gleiche Anzahl und Beabstandung von Zeilen wie die ersten und zweiten Sätze aufweisen, wobei wenigstens einer der fünften und sechsten Sätze zwischen den ersten und zweiten Sätzen gedruckt wird.

4. Verfahren nach Anspruch 2 oder 3, das den Schritt des gleichzeitigen Druckens einer zusätzlichen Vielzahl von vollständig außerhalb der ersten und zweiten Sätze liegenden Sätzen umfaßt.

5. Verfahren nach jedem der Ansprüche 2 bis 4, worin der Schritt des Druckens der dritten und vierten Sätze den Schritt einer Positionierung der dritten und vierten Sätze bezüglich des Druckmediums (54, 64) in einem Abstand von der Position der ersten und zweiten Sätze gleich der Anzahl von gleichzeitig gedruckten Zeilen, multipliziert mit dem vorbestimmten Zwischenzeilenabstand, umfaßt.

6. Verfahren nach jedem der Ansprüche 2 bis 5, worin der Schritt des Druckens der dritten und vierten Sätze das Drucken wenigstens einer Zeile der dritten und vierten Sätze zwischen Zeilen von wenigstens einem der ersten und zweiten Sätze umfaßt.

7. Vorrichtung zum Drucken eines aus Zeilen, die selektiv über einen vorbestimmten Bereich eines Druckmediums (54, 64) gedruckt sind, gebildeten Bildes, wobei die Zeilen Zentren aufweisen, die in einem vorbestimmten Zwischenzeilenabstand voneinander beabstandet sind, wobei die Vorrichtung einen Druckkopf (82), der bezüglich des Druckmediums beweglich ist und eine Vielzahl von Druckelementen (51, 52), die zum gleichzeitigen Drucken einer entsprechenden Vielzahl von Sätzen jeweils einer Vielzahl von benachbarten Druckzeilen, die einen ersten vorbestimmten Abstand von einer Zeile zur anderen aufweisen, wobei der Abstand zwischen jedem Satz und dem nächsten Zeilensatz in der Vielzahl davon ein zweiter vorbestimmter Abstand größer als ein Zwischenzeilenabstand ist, und Mittel (78) zum Ausführen einer Relativbewegung zwischen dem Druckkopf (82) und dem Druckmedium in einer Sequenz von Druckdurchläufen in einer Weise, bei welcher eine erste Vielzahl von Zeilensätzen gleichzeitig während einem ersten Druckdruchgang gedruckt werden und eine zweite Vielzahl von Zeilensätzen nachfolgend gleichzeitig während einem zweiten Druckdurchgang gedruckt werden, umfaßt, dadurch gekennzeichnet, daß die Vorrichtung derart aufgebaut und angeordnet ist, daß wenigstens ein Zeilensatz der zweiten Vielzahl von Zeilensätzen im Betrieb der Vorrichtung zwischen den Sätzen eines Paares benachbarter Zeilensätze in der ersten Vielzahl von Zeilensätzen gedruckt wird.

8. Vorrichtung nach Anspruch 7, worin der Druckkopf (82) wenigstens einen ersten Satz (51) und einen zweiten Satz (52) einer Vielzahl von Druckelementen aufweist, die zum gleichzeitigen Drucken korrespondierender Sätze einer Vielzahl von benachbarten Druckzeilen ausgebildet sind, wobei der Abstand zwischen den gleichzeitig gedruckten Sätzen ein zweiter vorbestimmter Abstand größer als ein Zwischenzeilenabstand ist, und worin die Mittel (78) zum Ausführen einer Relativbewegung zwischen dem Druckkopf (82) und dem Druckmedium (54, 64) ein Mittel (78) zum Bewegen des Druckkopfes relativ zum Druckmedium (64, 54) in einer Weise ist, bei welcher wenigstens ein erster Satz und ein zweiter Satz von Zeilen gleichzeitig während eines ersten Durchganges des Druckkopfes relativ zum Druckmedium (54, 64) gedruckt werden und ein dritter Satz und vierter Satz von Zeilen gleichzeitig während eines zweiten Durchganges gedruckt werden, wobei wenigstens einer der dritten und vierten Sätze zwischen den ersten und zweiten Sätzen gedruckt wird.

9. Vorrichtung nach Anspruch 8, worin das Bewegungsmittel (78) den Druckkopf (82) nachfolgend auf das Drucken der dritten und vierten Sätze zum gleichzeitigen Drucken wenigstens eines fünften Satzes und eines sechsten Satzes einer Vielzahl von Zeilen bewegt, wobei wenigstens ein Satz der fünften und sechsten Sätze zwischen den ersten und zweiten Sätzen gedruckt wird.

10. Vorrichtung nach Anspruch 8 oder 9, worin das Bewegungsmittel (78) den Druckkopf (82) zum gleichzeitigen Drucken einer zusätzlichen Vielzahl von Sätzen bewegt, die vollständig außerhalb der ersten und zweiten Sätze sind.

11. Vorrichtung nach jedem der Ansprüche 8 bis 10, worin das Bewegungsmittel (78) den Druckkopf (82) bewegt, so daß zum Drucken jeder Kombination gleichzeitig gedruckter Sätze dieser Druckkopf relativ zum Druckmedium (54, 64) in einem Abstand von der Position des Druckkopfes (82) zum Drucken der vorhergehenden Kombination gleichzeitig gedruckter Sätze, nämlich einem Abstand gleich der Anzahl von gleichzeitig gedruckten Zeilen, multipliziert mit dem vorbestimmten Zwischenzeilenabstand, positioniert ist.

12. Vorrichtung nach jedem der Ansprüche 8 bis 10, worin das Bewegungsmittel (78) den Druckkopf (82) bewegt, so daß wenigstens eine Zeile der dritten und vierten Sätze ebenfalls zwischen Zeilen wenigstens eines der ersten und zweiten Sätze gedruckt wird.

## Revendications

1. Procédé d'impression d'une image sur un milieu d'impression (54, 64) le long de lignes d'impression possédant des centres espacés d'une distance d'interligne prédéterminée à partir des centres des lignes d'impression voisines, le procédé comprenant l'impression simultanée d'une première pluralité de jeux de lignes, chacune des lignes d'une pluralité de lignes étant écartée d'une première distance prédéterminée d'une autre ligne du jeu, la distance entre chaque jeu et le jeu de lignes suivant de la pluralité de ceux-ci étant une deuxième distance prédéterminée supérieure à une distance d'interligne et les lignes constituant chaque jeu de lignes étant voisines des lignes d'impression sur le milieu d'impression (54, 64) ; et après l'impression de la première pluralité de jeux de lignes, l'impression simultanée d'une deuxième pluralité de jeux de lignes, chacun possédant le même nombre de lignes et le même écartement que ceux des jeux de la première pluralité, caractérisé en ce qu'au moins un jeu de lignes de la deuxième pluralité de jeux de lignes est imprimé entre les jeux d'une paire de jeux de lignes adjacents de la première pluralité de jeux de lignes.

2. Procédé selon la revendication 1 et comprenant les étapes consistant à :
i) imprimer simultanément au moins un premier jeu et un deuxième jeu d'une pluralité de lignes écartées d'une première distance prédéterminée, la distance entre le premier et le deuxième jeux étant une deuxième distance prédéterminée supérieure à une distance d'interligne, et les lignes constituant chaque jeu de lignes étant des lignes d'impression adjacentes sur le milieu d'impression (54, 64) et
ii) après avoir imprimé les premier et deuxième jeux de lignes, imprimer simultanément au moins des troisième et quatrième jeux possédant le même nombre de lignes et le même écartement que ceux du premier et deuxième jeux, au moins l'un des troisième et quatrième jeux étant imprimé entre les premier et deuxième jeux.

3. Procédé selon la revendication 2 et comprenant l'étape consistant à, après avoir imprimé les troisième et quatrième jeux, imprimer simultanément au moins des cinquième et sixième jeux possédant le même nombre de lignes et le même écartement que ceux des premier et deuxième jeux, au moins l'un des cinquième et sixième jeux étant imprimé entre les premier et deuxième jeux.

4. Procédé selon la revendication 2 ou 3 et comprenant l'étape consistant à imprimer simultanément une pluralité supplémentaire de jeux entièrement à l'extérieur des premier et deuxième jeux.

5. Procédé selon l'une quelconque des revendications 2 à 4, dans lequel l'étape consistant à imprimer les troisième et quatrième jeux comprend l'étape consistant à positionner les troisième et quatrième jeux par rapport au milieu d'impression (54, 64) à une distance de la position des premier et deuxième jeux égale au nombre de lignes simultanément imprimées multiplié par la distance d'interligne prédéterminée.

6. Procédé selon l'une quelconque des revendications 2 à 5, dans lequel l'étape consistant à imprimer les troisième et quatrième jeux comprend l'impression d'au moins une ligne des troisième et quatrième jeux entre les lignes d'au moins l'un des premier et deuxième jeux.

7. Dispositif servant à imprimer une image constituée de lignes imprimées sélectivement sur une zone prédéterminée d'un milieu d'impression (54, 64), lesdites lignes possèdent des centres espacés d'une distance d'interligne prédéterminée, le dispositif comprenant une tête d'impression (82) mobile par rapport au milieu d'impression et possédant une pluralité d'éléments d'impression (51, 52) agencés pour imprimer simultanément une pluralité correspondante de jeux, chacune des lignes d'une pluralité de lignes d'impression adjacentes étant écartée d'une première distance prédéterminée d'une autre, la distance entre chaque jeu et le jeu suivant de lignes de la pluralité de ceux-ci étant une deuxième distance prédéterminée supérieure à une distance d'interligne ; et des moyens (78) servant à réaliser un déplacement relatif entre la tête d'impression (82) et le milieu d'impression dans une séquence d'impression travaillent de telle sorte qu'une première pluralité de jeux de lignes est imprimée simultanément lors d'un premier passage d'impression et une deuxième pluralité de jeux de lignes est ensuite imprimée simultanément lors d'un deuxième passage d'impression, caractérisé en ce que le dispositif est construit et agencé de telle sorte qu'au moins un jeu de lignes de la deuxième pluralité de jeux de lignes est, lors du fonctionnement du dispositif, imprimé entre les jeux d'une paire de jeux de lignes adjacents de la première pluralité de jeux de lignes.

8. Dispositif selon la revendication 7, dans lequel la tête d'impression (82) possède au moins un premier jeu (51) et un deuxième jeu (52) d'une pluralité d'éléments d'impression agencés pour imprimer simultanément des jeux correspondants d'une pluralité de lignes d'impression adjacentes, la distance entre les jeux imprimés simultanément étant une deuxième distance prédéterminée supérieure à une distance d'interligne ; et dans lequel les moyens (78) servant à réaliser le déplacement relatif entre la tête d'impression (82) et le milieu d'impression (54, 64) comprennent des moyens (78) servant à déplacer la tête d'impression par rapport au milieu d'impression (64, 54) de telle sorte qu'au moins un premier jeu et un deuxième jeu de lignes sont imprimés simultanément lors du premier passage de la tête d'impression par rapport au milieu d'impression (54, 64), et un troisième jeu et un quatrième jeu de lignes sont imprimés simultanément lors d'un deuxième passage, au moins l'un des troisième et quatrième jeux étant imprimé entre les premier et deuxième jeux.

9. Dispositif selon la revendication 8, dans lequel les moyens de déplacement (78) déplacent la tête d'impression (82) pour imprimer simultanément, après avoir imprimer les troisième et quatrième jeux, au moins un cinquième jeu et un sixième jeu d'une pluralité de lignes, au moins l'un des cinquième et sixième jeux étant imprimé entre les premier et deuxième jeux.

10. Dispositif selon la revendication 8 ou 9, dans lequel les moyens de déplacement (78) déplacent la tête d'impression (82) pour imprimer simultanément une pluralité supplémentaire de jeux entièrement à l'extérieur des premier et deuxième jeux.

11. Dispositif selon l'une quelconque des revendications 8 à 10, dans lequel les moyens de déplacement (78) déplacent la tête d'impression (82) de sorte d'imprimer chaque combinaison de jeux imprimés simultanément, ladite tête d'impression est positionnée par rapport au milieu d'impression (54, 64) à une certaine distance de la position de la tête d'impression (82) pour imprimer la combinaison précédente de jeux imprimés simultanément, c'est-à-dire une distance égale au nombre de lignes imprimées simultanément multiplié par la distance d'interligne prédéterminée.

12. Dispositif selon l'une quelconque des revendications 8 à 10, dans lequel les moyens de déplacement (78) déplacent la tête d'impression (82) de sorte qu'au moins une ligne des troisième et quatrième jeux est également imprimée entre les lignes d'au moins l'un des premier et deuxième jeux.
